# EUROPÄISCHE PATENTANMELDUNG

(11) **EP 3 706 246 A1**
(43) Veröffentlichungstag der Anmeldung: **09.09.2020**
(21) Anmeldenummer: 20157099.1
(22) Anmeldetag: 13.02.2020
(51) Int. Cl.: H01R 4/18, H01R 43/048

(54) **VERBINDUNGSANORDNUNG, VENTIL MIT VERBINDUNGSANORDNUNG UND VERFAHREN ZUM VERBINDEN EINES DRAHTES MIT EINEM CRIMPVERBINDER**

(30) Priorität: 08.03.2019 DE 102019106022
(71) Anmelder: Alfmeier Präzision SE, 91757 Treuchtlingen (DE)
(72) Erfinder: DÖRFLER, Erich, 86899 Landsberg (DE); SCHWARZ, Maximilian, 91757 Treuchtlingen (DE)
(74) Vertreter: Schlögl, Markus

(57) **Zusammenfassung**

Die Erfindung betrifft eine Verbindungsanordnung (101) mit einem Crimpverbinder (102) und einem in diesem fixierten Draht (103),
- wobei der Crimpverbinder eine einstückig ausgebildete erste und eine einstückig ausgebildete zweite Klemmplatte (104, 105) umfasst, welche in einem Montagezustand den Draht (103) zwischen sich einklemmen und dabei hinsichtlich einer auf den Draht (103) in einer längsaxialen Belastungsrichtung einwirkenden Kraft zugfest fixieren,
- wobei die zumindest im Montagezustand einander zugewandten Innenflächen der ersten und zweiten Klemmplatte (104, 105) im Vormontagezustand in einer ersten Form ausgebildet sind,
- wobei im Montagezustand die erste und zweite Klemmplatte (104, 105) mit ihren Klemmflächen (104a, 105a) aneinander anliegen,
dadurch gekennzeichnet, dass die erste und zweite Klemmplatte (104, 105) mit einem Werkzeug im Montagezustand so in eine von der ersten Form verschiedene zweite Form verformt sind, dass der Draht durch die Verformung der ersten und zweiten Klemmplatten zumindest eine Welle ausbildet, wobei eine Amplitude der Welle im Wesentlichen normal zur ersten und/oder zweiten Klemmplatte (104, 105) ausgebildet ist.

Weiterhin betrifft die Erfindung ein Verfahren zum Verbinden eines Drahtes mit einem Crimpverbinder und ein Ventil mit der Verbindungsanordnung.

## Beschreibung

Die Erfindung betrifft eine Verbindungsanordnung umfassend einen Crimpverbinder und einen im Crimpverbinder fixierten bzw. zu fixierenden Draht, ein Ventil mit dem Crimpverbinder und ein Verfahren zum Verbinden eines Drahtes mit einem Crimpverbinder. Unter einem Draht ist dabei entweder ein einzelnes Filament bzw. ein einzelner Faden oder ein z.B. wie eine Litze ausgebildetes Bündel von Filamenten zu verstehen, insbesondere kann darunter auch ein Draht aus einer Formgedächtnislegierung verstanden werden. Der Crimpverbinder umfasst zwei Klemmplatten, zwischen denen ein Draht-Längsabschnitt, beispielsweise ein Drahtende, eingeklemmt ist.

Im Falle von zugbelasteten Drähten, beispielsweise von sich bei Bestromung verkürzenden Drähten aus einer Formgedächtnislegierung, muss dafür Sorge getragen werden, dass neben einer elektrischen auch eine ausreichend zugfeste mechanische Verbindung des Drahtes mit dem Crimpverbinder gewährleistet ist, wie z.B. aus der DE 10 2014 115 393 B3 bekannt ist. Zu diesem Zweck wird vielfach zusätzlich zu dem durch die Klemmwirkung der Klemmplatten erreichten Kraftschluss ein in Richtung der Zugbelastung des Drahts wirksamer Formschluss angestrebt. Dies kann erreicht werden, indem an eine der Klemmplatten des Crimpverbinders, welche den Draht zwischen sich aufnehmen, ein aus der Innenseite einer Klemmplatte herausragender Vorsprung angebracht ist und diesem gegenüberliegend in der Innenseite der anderen Klemmplatte eine Ausnehmung vorhanden ist. Beim Zusammenpressen der Klemmplatten wird der Draht von dem Vorsprung in die Ausnehmung gedrückt.

Die Herstellung solcher Klemmplatten mit vorgefertigtem Vorsprung und/oder Ausnehmung ist aufwendig und muss auf die Geometrie des Drahtes abgestimmt sein.

Aus der DE 10 2005 060 217 B4 und der EP 1 664 604 B1 ist jeweils ein Ventil bekannt, bei dem ein Draht aus einer Formgedächtnislegierung mit einem Crimpverbinder fixiert ist und der Draht ein bewegliches Ventilelement bewegt.

Nachteilig an den bekannten Crimpverbindern ist, dass bei einer glatten Oberfläche der Klemmflächen der Crimpverbinder die Gefahr besteht, dass der Draht herausrutscht. Andere bekannte Crimpverbinder, welche im Vormontagezustand Ausnehmungen aufweisen, sind mit Mehrkosten verbunden.

Aufgabe der Erfindung ist es daher, eine einen Crimpverbinder und einen Draht umfassende Verbindungsanordnung, ein Ventil mit dem Crimpverbinder und ein Verfahren zum Verbinden eines Drahtes mit einem Crimpverbinder anzugeben, die hinsichtlich der genannten Nachteile verbessert sind.

Diese Aufgabe wird hinsichtlich der Verbindungsanordnung gemäß Anspruch 1, hinsichtlich des Ventils gemäß Anspruch 10 und hinsichtlich des Verfahrens gemäß Anspruch 12 gelöst.

Die erfindungsgemäße Verbindungsanordnung umfasst einen Crimpverbinder und einen in diesem fixierten Draht. Der Crimpverbinder umfasst eine einstückig ausgebildete erste und eine einstückig ausgebildete zweite Klemmplatte, welche in einem Montagezustand den Draht zwischen sich einklemmen und dabei hinsichtlich einer auf den Draht in einer längsaxialen Belastungsrichtung einwirkenden Kraft zugfest fixieren.

Die zumindest im Montagezustand einander zugewandten Innenflächen der ersten und zweiten Klemmplatte sind im Vormontagezustand in einer ersten Form ausgebildet. Beispiele für eine erste Form sind eine, insbesondere mit einem Muster, geprägte Innenfläche, eine ebene Innenfläche oder eine gleichmäßig gekrümmte Innenfläche. Zweckmäßigerweise sind einander zugewandten Innenflächen der ersten und zweiten Klemmplatte im Vormontagezustand zumindest teilweise als ebene Klemmflächen ausgebildet. Insbesondere sind die erste Klemmplatte und die zweite Klemmplatte im Vormontagezustand im Wesentlichen oder vollständig als ebene Klemmfläche ausgebildet. Insbesondere weisen die Klemmflächen im Vormontagezustand keine Vorsprünge, insbesondere in Form von Materialverdickungen, auf. Unter ebener Klemmfläche soll eine im Rahmen üblicher Fertigungstoleranzen, insbesondere für Blechformteile, welche z.B. aus gewalztem Blech mittels Laserschneiden oder Stanzen und nachfolgendem Biegen hergestellt werden, ebene Fläche verstanden werden. Im Montagezustand liegen die erste und zweite Klemmplatte mit ihren Klemmflächen aneinander an. Erfindungsgemäß sind die erste und zweite Klemmplatte mit einem Werkzeug im Montagezustand so in eine von der ersten Form verschiedene zweite Form verformt, dass der Draht durch die Verformung der ersten und zweiten Klemmplatten zumindest eine Welle ausbildet, wobei eine Amplitude der Welle im Wesentlichen normal zur ersten und/oder zweiten Klemmplatte ausgebildet ist. In anderen Worten wird die Klemmwirkung des Crimps dadurch erhöht, dass mittels des Werkzeugs von beiden Seiten zumindest je eine Vertiefung an zueinander benachbarten Stellen eingebracht wird, so dass der Draht wellenförmig durch die verformten Bereiche geführt wird und somit mechanisch stabiler gehalten wird.

Der Draht besteht zweckmäßigerweise aus einem Material, das eine größere Härte aufweist als das Material der ersten und zweiten Klemmplatten.

In Ausgestaltung weist die erste Klemmplatte eine größere Anzahl an Verformungen auf als die zweite Klemmplatte. Weiterhin liegt die Wellenlänge der ausgebildeten Welle vorzugsweise im Bereich zwischen 0,5 bis 2-fach der kombinierten Dicke von erster und zweiter Klemmplatte und dem Draht.

In weiterer Ausgestaltung wird der Draht zumindest auf einer Seite parallel zur ersten und/oder zweiten Klemmplatte fortgeführt.

Zweckmäßigerweise weist die erste Klemmplatte und/oder die zweite Klemmplatte im Vormontagezustand eine einheitliche Dicke zumindest im Bereich der Klemmfläche auf. Insbesondere weist die erste Klemmplatte und/oder die zweite Klemmplatte im Vormontagezustand ein einheitliche Dicke auf. Die erste Klemmplatte und/oder die zweite Klemmplatte ist insbesondere als ebenes Blech im Vormontagezustand gebildet. Jede der Klemmplatten kann alternativ mit einer oder mehreren Ausnehmungen, insbesondere in Form von Vertiefungen oder Durchbrüchen, versehen sein.

Im Vormontagezustand schließen vorzugsweise die Klemmplatten einen spitzen Winkel β ein, der so gewählt ist, dass ein in den zwischen den Klemmplatten vorhandenen Zwischenraum eingeführter Draht an einer Sollposition an den Klemmflächen der Klemmplatten anliegt. Im Vormontagezustand können die erste und die zweite Klemmplatte einstückig aus einem Blech gebildet sein, welches in einem Verbindungsbereich zwischen der ersten Klemmplatte und der zweiten Klemmplatte eine Biegung mit dem Winkel β aufweist.

In Ausgestaltung umfasst die Verbindungsanordnung einen Crimpverbinder, welcher zumindest ein Einpresselement umfasst. Ein solches Einpresselement kann in einem von den Klemmplatten entfernten Bereich eines Crimpverbinderkörpers angeordnet sein. Einpresselement, Crimpverbinderkörper und Klemmplatten können als einstückiges Element ausgebildet sein.

In weiterer Ausgestaltung ist der Draht ein SMA-Draht und der Crimpverbinder geeignet, den SMA-Draht mit einer Leiterplatte, insbesondere für eine Ventilanwendung, zu verbinden und insbesondere elektrisch zu kontaktieren.

Das erfindungsgemäße Ventil umfasst eine erfindungsgemäße Verbindungsanordnung. In Ausgestaltung weist das Ventil ein Ventilgehäuse umfassend einen Gehäusedeckel, einen Gehäuseboden und ein zwischen dem Gehäusedeckel und dem Gehäuseboden angeordnetes Zwischengehäuse auf, wobei das Ventilgehäuse einen Ventilraum umschließt. Das Ventilgehäuse weist zumindest eine Ventilöffnung und zumindest ein innerhalb des Ventilraumes angeordnetes, zwischen einer Schließstellung zum Verschließen der Ventilöffnung und einer Öffnungsstellung zur Freigabe der Ventilöffnung axial bewegbares Stellelement, ein zur Betätigung des Stellelementes in Öffnungsrichtung bzw. Hubrichtung dienendes draht- oder bandförmiges SMA-Element aus einer Formgedächtnislegierung, ein zur Bewegung des Stellelementes in Schließrichtung bzw. Rückstellrichtung dienendes Rückstellelement und eine Leiterplatte auf. Das SMA-Element ist zur Betätigung des Stellelementes mit einem mittleren Abschnitt an dem Stellelement fixiert und zur Beaufschlagung mit Strom mit seinen Enden mittelbar oder unmittelbar mit der Leiterplatte elektrisch verbunden. Zumindest ein Teil der zur Führung des Stellelementes dienenden Führungsmittel und/oder zur Fixierung der Leiterplatte innerhalb des Ventiles bzw. des Ventilraumes dienende Befestigungsmittel und/oder ein Aufnahmeraum zur Aufnahme der zur elektrischen Kontaktierung der Leiterplatte erforderlichen Komponenten sind gemäß der Erfindung von dem Zwischengehäuse gebildet.

Das erfindungsgemäße Verfahren zum Verbinden eines Drahtes mit einem Crimpverbinder umfasst die folgenden Schritte:
- Bereitstellen eines Crimpverbinders mit einer einstückig ausgebildeten ersten und einer einstückig ausgebildeten zweiten Klemmplatte,
- Einlegen eines Drahtes zwischen einander zugewandten Innenflächen der ersten und zweiten Klemmplatte, welche im Vormontagezustand in einer ersten Form ausgebildet sind, insbesondere zumindest teilweise, insbesondere im Wesentlichen oder vollständig, als ebene Klemmflächen ausgebildet sind,
- Verformen der ersten und zweiten Klemmplatte von einer ersten Form in eine von der ersten Form verschiedene zweite Form mit einem Werkzeug, welches zwei Klemmbacken aufweist, wobei jede der Klemmbacken zumindest einen Vorsprung und eine Vertiefung aufweist, so dass der Draht durch die Verformung der ersten und zweiten Klemmplatten zumindest eine Welle ausbildet, wobei eine Amplitude der Welle im Wesentlichen normal zur ersten und/oder zweiten Klemmplatte ausgebildet ist.

Mit dem Verfahren wird in die im Vormontagezustand zumindest teilweise, insbesondere vollständig, ebenen Klemmplatten durch Verformen mit dem Werkzeug zumindest je ein Vorsprung und eine Vertiefung eingebracht, so dass der Draht mittels der ausgebildeten Welle gehalten wird. Diese Crimpverbindung zeichnet sich damit vorteilhafterweise durch einen kostengünstigen und einfach herzustellenden Crimpverbinder und gleichzeitig eine Verbindung mit einer hohen Klemmwirkung aus.

Zweckmäßigerweise greift jeweils der Vorsprung der einen Klemmbacke des Werkzeugs in die Vertiefung der anderen Klemmbacke des Werkzeugs ein.

Insbesondere weisen die Klemmbacken des Werkzeugs jeweils eine fortlaufend wellige oder gezackte Oberfläche in einer oder zwei Dimensionen auf.

Die Erfindung wird nun unter Bezugnahme auf die beigefügten Abbildungen näher erläutert. Es zeigen:
Fig. 1 einen Crimpverbinder einer ersten Ausgestaltung im Vormontagezustand;
Fig. 2 einen Crimpverbinder einer zweiten Ausgestaltung im Vormontagezustand;
Fig. 3 eine Verbindungsanordnung mit einem Crimpverbinder der ersten Ausgestaltung im Montagezustand in seitlicher Ansicht;
Fig. 4 die Verbindungsanordnung aus Fig. 3 in einer Ansicht von unten;
Fig. 5 eine rückwärtige Ansicht der Verbindungsanordnung nach erster Ausgestaltung;
Fig. 6 ein Werkzeug zum Crimpen;
Fig. 7 das Crimpen;
Fig. 8 ein erstes Ventil mit der Verbindungsanordnung der ersten Ausgestaltung und
Fig. 9 ein zweites Ventil mit der Verbindungsanordnung der ersten Ausgestaltung.

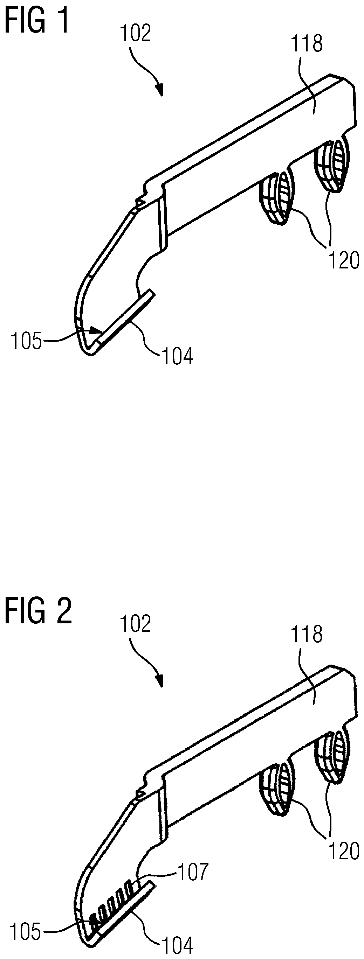

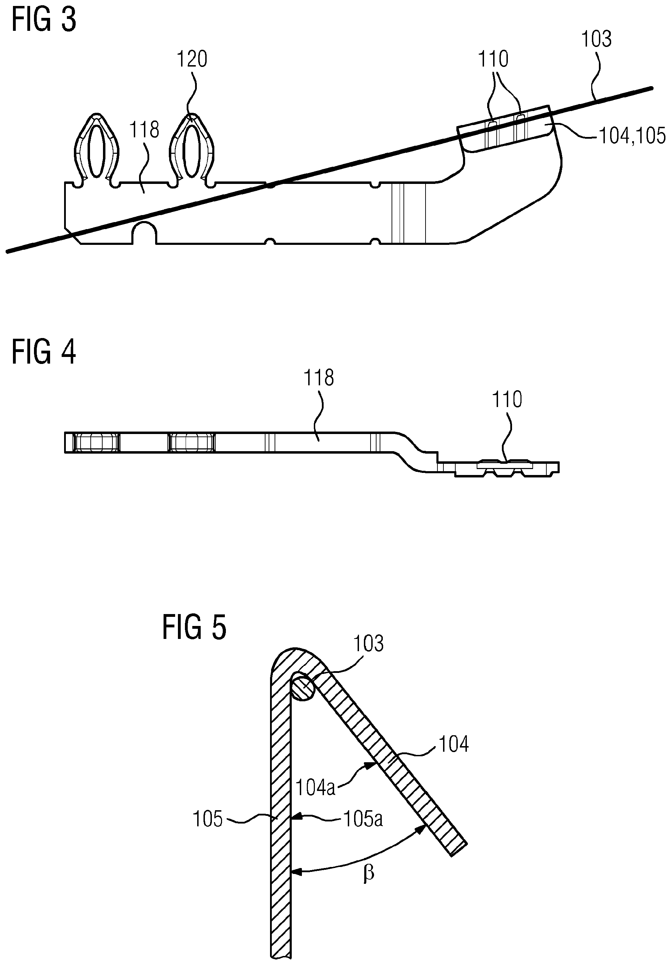

Fig. 1 zeigt einen Crimpverbinder 102 einer ersten Ausgestaltung im Vormontagezustand. Der Crimpverbinder 102 weist eine erste Klemmplatte 104 und eine zweite Klemmplatte 105 auf. Die erste und die zweite Klemmplatte 104, 105 sind eben mit einer gleichmäßigen Dicke ausgebildet. Die erste und die zweite Klemmplatte 104, 105 sind jeweils einstückig ausgebildet und schließen im Vormontagezustand an einer Falz zwischen der ersten und der zweiten Klemmplatte einen spitzen Winkel β ein. Dieser spitze Winkel β ist insbesondere in Fig. 5 zu sehen.

Der Crimpverbinder 102 weist weiterhin einen Crimpverbinderkörper 118 und zwei Einpresselemente 120 auf. Der Crimpverbinderkörper 118 weist in der gezeigten Ausgestaltung eine höhere Dicke auf als der Bereich der ersten und der zweiten Klemmplatte 104, 105. In einer nicht dargestellten alternativen Ausgestaltung weisen Crimpverbinder 118 und Klemmplatten 104, 105 eine gleiche Dicke auf. In dieser Ausgestaltung weist der Crimpverbinder im Übergangsbereich zweckmäßigerweise eine S-Biegung zur Stabilisierung auf. Die Einpresselemente 120 sind zweckmäßigerweise einstückig mit dem Crimpverbinderkörper 118 ausgestaltet.

Fig. 2 zeigt eine zweite Ausgestaltung eines Crimpverbinders 102, bei dem in Abweichung zu der ersten Ausgestaltung Ausnehmungen 107 im Verbindungsbereich der ersten und zweiten Klemmplatte 104, 105 angeordnet sind. Die Klemmflächen sind hier somit teilweise eben ausgestaltet. Die Ausnehmungen 107 sind als rechteckige Vertiefungen ausgestaltet. Die Vertiefungen können sich von der ersten Klemmplatte 104 über die Falz zur zweiten Klemmplatte 105 hin erstrecken. Alternativ ist es auch möglich, dass sich eine Vertiefung ausschließlich auf einer Klemmplatte befindet. In einer alternativen Ausgestaltung können die Ausnehmung auch als Durchbrüche ausgestaltet sein.

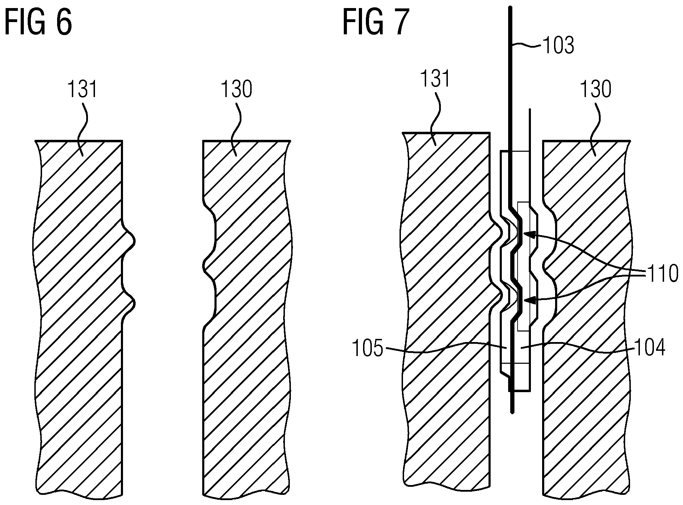

Fig. 3 und Fig. 4 zeigen eine Verbindungsanordnung 101 nach der ersten Ausgestaltung in zwei zueinander senkrechten Ansichten im Montagezustand. Die Verbindungsanordnung 101 umfasst einen Crimpverbinder 102 und einen Draht 103. Der Draht 103 ist zwischen der ersten Klemmplatte 104 und der zweiten Klemmplatte 105 verklemmt. Die erste und die zweite Klemmplatte 104 und 105 sind mit einem Werkzeug verklemmt, welches eine erste Klemmbacke 130 und eine zweite Klemmbacke 131 aufweist. Solche Klemmbacken 130, 131 sind in der Fig. 6 gezeigt. Die Klemmbacken 130, 131 weisen jeweils ein Oberflächenprofil auf, welches Vorsprünge und Vertiefungen umfasst, wobei der Vorsprung der einen Klemmbacke in eine Vertiefung der jeweils anderen Klemmbacke eingreift. Mit diesem Werkzeug werden die erste und die zweite Klemmplatte 104, 105 mit einem dazwischenliegenden Draht 103 verklemmt. Dieser Crimpvorgang ist in Fig. 7 dargestellt, bei dem die erste und die zweite Klemmplatte 104, 105 mit dem eingelegten Draht 103 zwischen den Klemmbacken 130, 131 angeordnet ist. Nach diesem Crimpvorgang, d.h. im Montagezustand, weisen die Klemmplatten 104, 105 Wellen 110 auf, wie sie in Fig. 3 und 4 zu sehen sind.

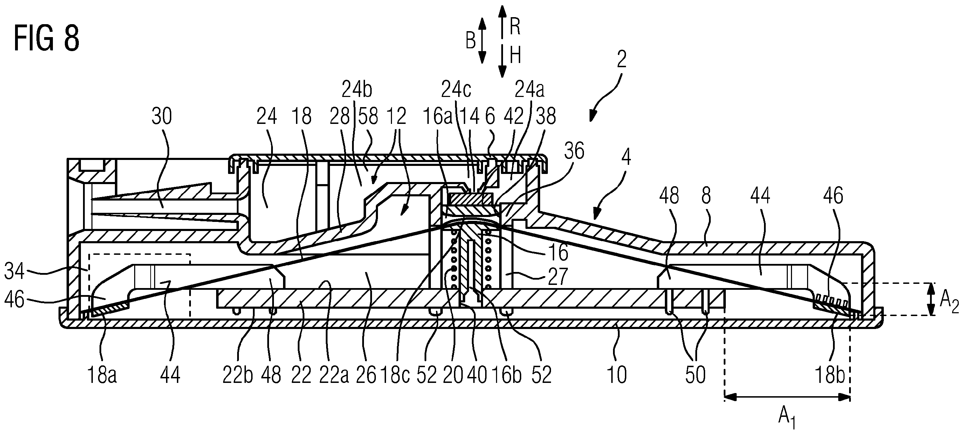

Fig. 8 zeigt ein Ventil 2 mit einem Ventilgehäuse 4, welches aus einem oberen Gehäusedeckel 6, einem unteren Gehäuseboden 10 und einem zwischen dem Gehäusedeckel 6 und dem Gehäuseboden 10 angeordneten Zwischengehäuse 8 zusammengesetzt ist. Das Ventilgehäuse 4 umschließt einen Ventilraum 12, in welchen eine Ventilöffnung 14 mündet. Innerhalb des Ventilraums 12 ist ein zwischen einer Schließstellung zum Verschließen der Ventilöffnung 14 und einer Öffnungsstellung zur Freigabe der Ventilöffnung 14 in einer Bewegungsrichtung B axial bewegbares Stellelement 16 angeordnet. Zur Betätigung des Stellelementes 16 in einer Öffnungsrichtung bzw. Hubrichtung H dient ein drahtförmiges SMA-Element 18 aus einer Formgedächtnislegierung, welches mit einem mittleren Abschnitt 18c an dem Stellelement 16, genauer an dessen erstem Endabschnitt 16a gehalten ist. Zur Beaufschlagung mit Strom ist das SMA-Element 18 mit seinen Enden 18a, 18b mit einer ebenfalls innerhalb des Ventilraumes 12 angeordneten Leiterplatte 22 elektrisch verbunden.

Zur Bewegung des Stellelementes 16 in einer Schließrichtung bzw. Rückstellrichtung R dient ein Rückstellelement 20, vorliegend eine Schraubendruckfeder, die einen zweiten Endabschnitt 16b des Stellelementes 16 konzentrisch umgibt und sich mit einem ersten Ende an der Leiterplatte 22 und mit einem zweiten Ende an dem ersten Endabschnitt 16b des Stellelementes 16, der gegenüber dem zweiten Endabschnitt 16b radial verbreitert ist, abstützt.

Das Zwischengehäuse 8 umfasst alle für die Funktionalität des Ventils 2 erforderlichen Komponenten, mit anderen Worten sind alle hierzu notwendigen Bauteile in dem Zwischengehäuse 8 selbst integriert, wie nachfolgend beschrieben wird.

Der Ventilraum 12 ist in eine Strömungskammer 24 und eine Betätigungskammer 26 unterteilt, die durch eine Trennwand 28 voneinander getrennt sind. Das Stellelement 16 sowie die zur Betätigung des Stellelementes 16 erforderlichen Komponenten, nämlich das SMA-Element 18, das Rückstellelement 20 sowie die Leiterplatte 22, sind innerhalb der Betätigungskammer 26 angeordnet. Die Trennwand 28 ist einstückig mit dem Zwischengehäuse 8 ausgebildet bzw. an diesem angeformt. Die Strömungskammer 24 weist einen ersten Bereich 24a und einen zweiten Bereich 24b auf, die über einen Verbindungskanal 24c, der in einer Schließstellung des Stellelementes 16 verschlossen und in einer Öffnungsstellung des Stellelementes 16 freigegeben ist, miteinander verbunden sind.

Zur Zuführung von Luft in den Ventilraum 12, genauer in die Strömungskammer 24 ist deren erster Bereich 24a mit einer Luftversorgungseinheit bzw. einer pneumatischen Pumpe verbunden bzw. ein - in Fig. 8 nicht sichtbarer - Druckanschluss, der über eine Versorgungsleitung mit der pneumatischen Pumpe verbunden ist oder verbunden wird, mündet mittel- oder unmittelbar in den ersten Bereich 24a der Strömungskammer 24. Durch Freigabe der Ventilöffnung 14 kann die zugeführte Luft über den die Ventilöffnung durchsetzenden Verbindungskanal 24c von dem ersten Bereich 24a in den zweiten Bereich 24b strömen. Das Ventil 2 dient insbesondere zum Befüllen eines - nicht dargestellten - Medienspeichers, beispielsweise eines Luftkissens eines Fahrzeugsitzes mit Konturverstellung. Hierzu ist der Ventilraum 12, genauer die Strömungskammer 24 bzw. deren zweiter Bereich 24b mit einem Verbraucheranschluss 30 fluidisch verbunden bzw. der Verbraucheranschluss 30 mündet in den zweiten Bereich 24b, sodass der Medienspeicher mittels Schläuchen an das Ventil 2 angeschlossen werden kann. Sowohl der Druckanschluss als auch der Verbraucheranschluss 30 sind einstückig mit dem Zwischengehäuse 8 ausgebildet und stehen nicht aus diesem hervor. Sofern das Ventil 2 zum Auslassen von Luft aus einem Medienspeicher dient, ist der erste Bereich 24a der Strömungskammer 24 mit der Atmosphäre verbunden bzw. verbindbar, bei geöffneter Ventilöffnung 14 kann die Luft aus dem Medienspeicher bzw. aus dem zweiten Bereich 24b und über den Verbindungskanal 24c in den ersten Bereich 24a strömen und von dort an die Umgebung abgegeben werden.

Ferner weist das Zwischengehäuse 8 einen Aufnahmeraum 34 zur Aufnahme der zur elektrischen Kontaktierung der Leiterplatte 22 erforderlichen Komponenten, wie beispielsweise Steckverbinder, auf, welcher in Fig. 8 in einem hinteren Teil des Zwischengehäuses 8 angeordnet und lediglich gestrichelt dargestellt ist.

Zur Führung des Stellelementes 16 während dessen Betätigung sind zum einen Führungsmittel vorgesehen, die von dem Zwischengehäuse 8 gebildet werden. Die Führungsmittel umfassen eine Zwischenwand 36, die sich ausgehend von der Trennwand 28 in einem Bereich der Ventilöffnung 14 in Bewegungsrichtung B in die Betätigungskammer 26 hinein erstreckt und einstückig mit der Trennwand 28 bzw. dem Zwischengehäuse 8 ausgebildet ist. Die Zwischenwand 36 umgrenzt einen Aufnahmeraum 38 für den oberen, der Ventilöffnung 14 zugewandten ersten Endabschnitt 16a. Zum Führung des zweiten Endabschnittes 16b sind Führungsmittel in der Leiterplatte 22 integriert und zwar in Form einer darin ausgebildeten Ausnehmung 40, vorliegend eine Durchgangsöffnung, in welche sich der zweite Endabschnitt 16b sowohl in der Öffnungs- als auch in der Schließstellung des Stellelementes 16 hineinerstreckt. Zur Führung des SMA-Elementes 16 weist die Zwischenwand 36 sich in Bewegungsrichtung B erstreckende Ausnehmungen 27 auf.

Somit sind auch zur Führung des Stellelementes 16 während einer axialen Bewegung in Bewegungsrichtung B, also während der Betätigung des Stellelementes 16 keine zusätzlichen oder separaten Führungsmittel in Form weiterer Komponenten erforderlich.

Um die Ventilöffnung 14 in der Schließstellung - wie in Fig. 8 gezeigt - zuverlässig zu verschließen, ist an dem der Ventilöffnung 14 zugewandten Endabschnitt 16a ein die Ventilöffnung 14 verschließendes Dichtelement 42 angeordnet, welches mit einem die Ventilöffnung 14 umgebendem Dichtsitz zusammenwirkt.

Zur Ansteuerung des Ventils 2 und zur Beaufschlagung des SMA-Elementes 18 mit Strom, um eine Verkürzung desselben und somit eine Betätigung des Stellelementes 16 zu bewirken, sind die Enden 18a, 18b mit der Leiterplatte 22 elektrisch verbunden und zwar jeweils mittels eines Crimpverbinders 44. Ein solcher Crimpverbinder 44 ist einer der in Fig. 1 oder Fig. 2 dargestellten Crimpverbinder 102. Das SMA-Element 18 ist ein Draht 103. Die Enden 18a, 18b des SMA-Elementes 18 sind jeweils in einer Aufnahme 46 des Crimpverbinders 44 fixiert und somit mittelbar über die Crimpverbinder 44 mit der Leiterplatte 22 kontaktiert. Die Crimpverbinder 44 ragen senkrecht zu der Bewegungsrichtung B jeweils seitlich mit einem Überstand A₁ über die Leiterplatte 22 hinaus. Ferner erstrecken sich die Crimpverbinder 44 in Hubrichtung H von einer Oberseite 22a der Leiterplatte 22 und parallel zu dieser in Richtung des Gehäusebodens 8, also mit einem Überstand A₂ ausgehend von der Oberseite 22a der Leiterplatte 22 in Richtung zu deren Unterseite 22b, wobei die Aufnahme 46 des Crimpverbinders 44 mit Abstand vor dem Gehäuseboden 10 endet, also freischwebend innerhalb des Ventilraumes 12 angeordnet ist. Ein von der Aufnahme 46 beabstandeter Abschnitt 48 des Crimpverbinders 44 ist über Klemmmittel 50 elektrisch mit der Leiterplatte 22 verbunden. Dabei kann der Abschnitt 48 sowohl flächig auf der Oberseite 22a aufliegen als auch zumindest teilweise einen geringen Abstand zu der Oberseite 22a aufweisen. Um eine von Toleranzen der Leiterplatte 22 bzw. deren Oberseite 22a unabhängige Verbindung zu erreichen, ist der Crimpverbinder 44 bzw. dessen Abschnitt 48 vollständig minimal von der Oberseite 22a beabstandet und der Crimpverbinder 44 wird lediglich durch die Klemmmittel 50 getragen. Jeder Crimpverbinder 44 weist vorliegend zwei sich jeweils durch eine Ausnehmung der Leiterplatte 22 erstreckende, vorliegend im Wesentlichen oval und ringförmig ausgebildete Klemmmittel 50 auf, die zum Einstecken in die Ausnehmung elastisch verformbar und im Montagezustand form- und/oder kraftschlüssig in der Ausnehmung gehalten sind. Die Crimpverbinder 44 stellen somit die elektrische Verbindung zwischen den daran fixierten Enden 18a, 18b des SMA-Elementes 18 und der Leiterplatte 22 her. Durch die sowohl seitlich als auch in Hubrichtung H überstehenden Crimpverbinder 44 kann eine zusätzliche Länge des SMA-Elements 18, nämlich die Länge der Diagonale eines gedachten Rechteckes mit den Seitenlängen A₁ und A₂ zur Betätigung des Stellelementes 16 genutzt werden, wodurch insgesamt eine Reduzierung der Bauhöhe des Ventils 2 erreicht wird. Die Leiterplatte 22 selbst wird durch einen in den Aufnahmeraum 34 des Zwischengehäuses 8 einsteckbaren Steckverbinder mit einem elektrischen Anschluss kontaktiert.

Zur Befestigung der Leiterplatte 22 innerhalb des Ventilraumes 12, weist die integral mit dem Zwischengehäuse 8 ausgebildete Zwischenwand 36 als Befestigungsmittel zwei verformbare Vorsprünge 52 auf, die an deren Stirnseite angeformt sind und sich im Montagezustand durch eine Durchgangsöffnung der Leiterplatte 22 erstrecken und unlösbar mit der Leiterplatte 22 verbunden sind. Die Stirnseite bildet zugleich eine Anschlagfläche für die Leiterplatte 22 aus.

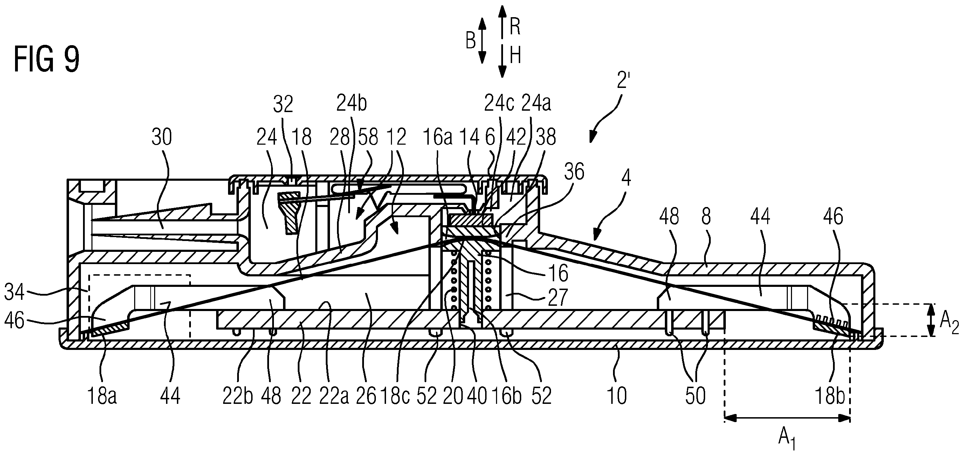

Das in Fig. 9 dargestellte Ventil 2' ist exemplarisch als 3/2-Wegeventil ausgebildet und weist somit eine weitere Ventilöffnung, und zwar eine Öffnung 32, die den Ventilraum 12 mit der Atmosphäre verbindet, um ein Ausströmen von Luft aus dem Ventilraum 12 zu erlauben, auf. Ansonsten entspricht die Ausgestaltung des Ventiles 2' der des in Fig. 8 gezeigten Ventiles 2 ("2/2-Wegeventil"), sodass die einzelnen Komponenten mit denselben Bezugszeichen versehen sind. Um die 3/2-Wege-Funktionalität zu erreichen, ist innerhalb des Ventilraumes 12 bzw. innerhalb der Strömungskammer 24 ein Stellglied 58 angeordnet, welches drehbar an dem Zwischengehäuse 8 gelagert und mit dem Stellelement 16 wirkverbunden ist. Das Stellelement 58 weist an einem der Öffnung 32 zugewandten Abschnitt ein Dichtelement 60 zum Verschließen der Öffnung 32 auf. An einem dem Stellelement 16 zugewandten Endabschnitt umfasst das Stellglied 58 einen Schaltfinger 62, welcher mit dem Stellelement 16 in Kontakt ist bzw. an dessen Dichtelement 38 anliegt. Wird das Stellelement 16 betätigt und die Ventilöffnung 14 wird geöffnet, wird der Schaltfinger 62 aufgrund eines Rückstellelementes 64, vorliegend eine Blattfeder, ebenfalls in Hubrichtung bewegt und das Stellglied 58 somit um seinen Drehpunkt gedreht, sodass die Öffnung 58 von dem Dichtelement 60 verschlossen wird. Wird das SMA-Element 18 nicht mehr mit Strom beaufschlagt und da Stellelement 16 somit aufgrund des Rückstellelementes 20 in Rückstellrichtung R bewegt, wird der Schaltfinger 62 durch das Stellelement 16 bzw. dessen Dichtelement 38 ebenfalls in Rückstellrichtung R bewegt. Dadurch und bedingt durch einen V-förmigen Drehpunkt 66 des Stellgliedes 58 öffnet das Dichtelement 60 die Öffnung 32. Die Öffnung 32 zur Atmosphäre ist somit bei sich in Schließstellung befindendem Stellelement 16 freigegeben und bei sich in Freigabestellung befindendem Stellelement 16 verschlossen ist, sodass sichergestellt ist, dass der Ventilraum 12 bzw. ein Medienspeicher bei Nichtbetätigung des Ventils 2 stets entlüftet wird. Ein solches 3/2-Wegeventil wird beispielsweise bei einem Fahrzeugsitz mit Massagefunktion eingesetzt, wobei ein oder mehrere Luftkissen jeweils zyklisch be- und entlüftet werden.

**Bezugszeichenliste**

| | | | |
|---|---|---|---|
| 2 | Ventil | 30 | Verbraucheranschluss |
| 4 | Ventilgehäuse | 32 | Öffnung |
| 6 | Gehäusedeckel | 34 | Aufnahmeraum |
| 8 | Zwischengehäuse | 36 | Zwischenwand |
| 10 | Gehäuseboden | 38 | Aufnahmeraum |
| 12 | Ventilraum | 40 | Ausnehmung |
| 14 | Ventilöffnung | 42 | Dichtelement |
| 16 | Stellelement | 44 | Crimpverbinder |
| 16a | erster Endabschnitt des Stellelementes | 46 | Aufnahme des Crimpverbinders |
| 16b | zweiter Endabschnitt des Stellelementes | 48 | Abschnitt des Crimpverbinders |
| 18 | SMA-Element | 50 | Klemmmittel |
| 18a | erstes Ende des SMA-Elementes | 52 | Vorsprung |
| 18b | zweites Ende des SMA-Elementes | 54 | Durchgangsöffnung |
| 18c | mittlerer Abschnitt des SMA-Elements | 56 | Schlitz |
| 20 | Rückstellelement (Schraubenfeder) | 58 | Stellglied |
| 22 | Leiterplatte | 60 | Dichtelement |
| 22a | Oberseite der Leiterplatte | 62 | Schaltfinger |
| 22b | Unterseite der Leiterplatte | 64 | Rückstellelement |
| 24 | Strömungskammer | 66 | Drehpunkt |
| 24a | erster Bereich der Strömungskammer | 92 | Luftspalt |
| 24b | zweiter Bereich der Strömungskammer | | |
| 26 | Betätigungskammer | 101 | Verbindungsanordnung |
| 28 | Trennwand | 102 | Crimpverbinder |
| | | 103 | Draht |
| | | 104 | erste Klemmplatte |
| | | 104a | erste Klemmfläche |
| | | 105 | zweite Klemmplatte |
| | | 105a | zweite Klemmfläche |
| | | 107 | Ausnehmung |
| | | 118 | Crimpverbinderkörper |
| 110 | Welle | 120 | Einpresselement |
| 112 | Vorsprung | | |
| 114 | Vertiefung | 130 | erste Klemmbacke |
| | | 131 | zweite Klemmbacke |

## Patentansprüche

1. Verbindungsanordnung (101) mit einem Crimpverbinder (102) und einem in diesem fixierten Draht (103),
- wobei der Crimpverbinder (102) eine einstückig ausgebildete erste und eine einstückig ausgebildete zweite Klemmplatte (104, 105) umfasst, welche in einem Montagezustand den Draht (103) zwischen sich einklemmen und dabei hinsichtlich einer auf den Draht (103) in einer längsaxialen Belastungsrichtung einwirkenden Kraft zugfest fixieren,
- wobei die zumindest im Montagezustand einander zugewandten Innenflächen der ersten und zweiten Klemmplatte (104, 105) im Vormontagezustand in einer ersten Form ausgebildet sind,
- wobei im Montagezustand die erste und zweite Klemmplatte (104, 105) mit ihren Klemmflächen (104a, 105a) aneinander anliegen,
**dadurch gekennzeichnet, dass** die erste und zweite Klemmplatte (104, 105) mit einem Werkzeug im Montagezustand so in eine von der ersten Form verschiedene zweite Form verformt sind, dass der Draht durch die Verformung der ersten und zweiten Klemmplatten (104, 105) zumindest eine Welle (110) ausbildet, wobei eine Amplitude der Welle im Wesentlichen normal zur ersten und/oder zweiten Klemmplatte (104, 105) ausgebildet ist.

2. Verbindungsanordnung (101) nach Anspruch 1, wobei die einander zugewandten Innenflächen der ersten und zweiten Klemmplatte (104, 105) im Vormontagezustand zumindest teilweise als ebene Klemmflächen (104a, 105a) ausgebildet sind.

3. Verbindungsanordnung (101) nach Anspruch 1 oder 2, wobei der Draht (103) aus einem Material besteht, das eine größere Härte aufweist als das Material der ersten und zweiten Klemmplatten (104, 105).

4. Verbindungsanordnung (101) nach einem der vorhergehenden Ansprüche, wobei die erste Klemmplatte (104) eine größere Anzahl an Verformungen aufweist als die zweite Klemmplatte (105).

5. Verbindungsanordnung (101) nach einem der vorhergehenden Ansprüche, wobei die Wellenlänge der ausgebildeten Welle (110) im Bereich zwischen 0,5 bis 2-fach der kombinierten Dicke von erster und zweiter Klemmplatte (104, 105) und dem Draht (103) liegt.

6. Verbindungsanordnung (101) nach einem der vorhergehenden Ansprüche, wobei die Welle (110) so ausgestaltet ist, dass der Draht (103) zumindest auf einer Seite parallel zur ersten und/oder zweiten Klemmplatte (104, 105) fortgeführt wird.

7. Verbindungsanordnung (101) nach einem der vorhergehenden Ansprüche, wobei die erste Klemmplatte (104) und/oder die zweite Klemmplatte (105) im Vormontagezustand eine einheitliche Dicke zumindest im Bereich der Klemmfläche (104a, 105a) aufweisen.

8. Verbindungsanordnung (101) nach einem der vorhergehenden Ansprüche, wobei im Vormontagezustand die Klemmplatten (104, 105) einen spitzen Winkel (β) einschließen, der so gewählt ist, dass ein in den zwischen den Klemmplatten (104, 105) vorhandenen Zwischenraum eingeführter Draht (103) an einer Sollposition an den Klemmflächen (104a, 105a) der Klemmplatten (104, 105) anliegt

9. Verbindungsanordnung (101) nach einem der vorhergehenden Ansprüche, wobei die Verbindungsanordnung (101) einen Crimpverbinder (102) umfasst, welcher zumindest ein Einpresselement umfasst.

10. Verbindungsanordnung (101) nach einem der vorhergehenden Ansprüche, wobei der Draht (103) ein SMA-Draht ist und der Crimpverbinder (102) geeignet ist, den SMA-Draht mit einer Leiterplatte für zu Verbinden.

11. Ventil (2) mit einer Verbindungsanordnung nach einem der vorhergehenden Ansprüchen.

12. Ventil (2) nach Anspruch 11 mit einem Ventilgehäuse (4), umfassend einen Gehäusedeckel (6), einen Gehäuseboden (10) und ein zwischen dem Gehäusedeckel (6) und dem Gehäuseboden (10) angeordnetes Zwischengehäuse (8), wobei das Ventilgehäuse (4) einen Ventilraum (12) umschließt und zumindest eine Ventilöffnung (14) aufweist, wobei innerhalb des Ventilraumes (12) zumindest ein zwischen einer Schließstellung zum Verschließen der Ventilöffnung (14) und einer Öffnungsstellung zur Freigabe der Ventilöffnung (14) axial bewegbares Stellelement (16), ein zur Betätigung des Stellelementes (16) in Öffnungsrichtung dienendes draht- oder bandförmiges SMA-Element (18) aus einer Formgedächtnislegierung welches den Draht (103) bildet, ein zur Bewegung des Stellelementes (16) in Schließrichtung dienendes Rückstellelement (20) und eine Leiterplatte (22) angeordnet sind, wobei das SMA-Element (18) mit einem mittleren Abschnitt (18c) an dem Stellelement (16) fixiert und zur Beaufschlagung mit Strom mit seinen Enden (18a, 18b) mit der Leiterplatte (22) mit dem Crimpverbinder (102) elektrisch verbunden ist.

13. Verfahren zum Verbinden eines Drahtes (103) mit einem Crimpverbinder (102) umfassend:
- Bereitstellen eines Crimpverbinder (102) mit einer einstückig ausgebildeten ersten und einer einstückig ausgebildeten zweiten Klemmplatte (104, 105),
- Einlegen eines Drahtes (103) zwischen einander zugewandten Innenflächen der ersten und zweiten Klemmplatte (104, 105), welche im Vormontagezustand in einer ersten Form ausgebildet sind,
- Verformen der ersten und zweiten Klemmplatte (104, 105) von einer ersten Form in eine von der ersten Form verschiedene zweite Form mit einem Werkzeug, welches zwei Klemmbacken (130, 131) aufweist, wobei jede der Klemmbacken (130, 131) zumindest einen Vorsprung und eine Vertiefung aufweist, so dass der Draht (103) durch die Verformung der ersten und zweiten Klemmplatten zumindest eine Welle (110) ausbildet, wobei eine Amplitude der Welle (110) im Wesentlichen normal zur ersten und/oder zweiten Klemmplatte (104, 105) ausgebildet ist.

14. Verfahren nach Anspruch 13, wobei jeweils der Vorsprung der einen Klemmbacke (130) in die Vertiefung der anderen Klemmbacke (131) eingreift.

15. Verfahren nach Anspruch 13 oder 14, wobei die Klemmbacken (130, 131) jeweils eine fortlaufend wellige oder gezackte Oberfläche in einer oder zwei Dimensionen aufweisen.
